(19) Europäisches Patentamt
European Patent Office
Office européen des brevets

(11) **EP 2 521 253 A1**

(12) **EUROPEAN PATENT APPLICATION**
published in accordance with Art. 153(4) EPC

(43) Date of publication:
**07.11.2012 Bulletin 2012/45**

(51) Int Cl.:
***H02M 3/155*** (2006.01)

(21) Application number: **09852796.3**

(22) Date of filing: **28.12.2009**

(86) International application number:
**PCT/JP2009/071751**

(87) International publication number:
**WO 2011/080818 (07.07.2011 Gazette 2011/27)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Toyota Jidosha Kabushiki Kaisha Toyota-shi, Aichi 471-8571 (JP)**

(72) Inventor: **ANG, Wanleng Toyota-shi Aichi 471-8571 (JP)**

(74) Representative: **Intès, Didier Gérard André et al Cabinet Beau de Loménie 158, rue de l'Université 75340 Paris Cedex 07 (FR)**

(54) **POWER SUPPLY DEVICE**

(57) A ripple current characteristic (101) of a magnetic-coupling-type multi-phase converter includes a local minimum of the ripple current, with respect to a change of the duty ratio. In a region (110) and another region (120), the ripple current is larger than a predetermined level. In the case where it is necessary to enhance the responsiveness of the multi-phase converter, a control circuit sets a voltage command value for the multi-phase converter, in accordance with the ripple current characteristic (101), so that the duty ratio is limited to a value that makes the ripple current larger than the predetermined level.

FIG.3

EP 2 521 253 A1

**Description**

TECHNICAL FIELD

The present invention relates to a power supply device, and more specifically to a power supply device provided with a multi-phase converter including a magnetic-coupling-type reactor.

BACKGROUND ART

A so-called multi-phase converter made up of a plurality of parallel-connected converters and configured to operate these converters with respective phases shifted from each other is known. For example, Japanese Patent Laying-Open No. 2005-65384 (PTL 1) discloses such a multi-phase converter in which a switching element of one converter and a switching element of the other converter are turned on simultaneously when highspeed response is required, and otherwise turned on alternately.

CITATION LIST

PATENT LITERATURE

PTL 1: Japanese Patent Laying-Open No. 2005-65384

SUMMARY OF INVENTION

TECHNICAL PROBLEM

When the timing at which the switching elements are turned on is changed, the output of the multi-phase converter varies and becomes discontinuous. Therefore, the approach disclosed in Japanese Patent Laying-Open No. 2005-65384 requires separate complicated control, in order to keep continuity of the output of the multi-phase converter.

Further, by solely the turn-on and turn-off of the switching elements, it may be impossible to change the response speed of the multi-phase converter. In this case, a separate dedicated circuit must be added, which causes an increase in cost.

The present invention has been made to solve the above-described problems, and an object of the present invention is to enhance, in a power supply device including a multi-phase converter having a magnetic-coupling-type reactor element, the responsiveness of the multi-phase converter by reliably making a ripple current larger than a predetermined level.

SOLUTION TO PROBLEM

A power supply device according to the present invention includes: a multi-phase converter including a plurality of chopper circuits connected in parallel between a power supply line connected to a load and a DC power supply; and a control circuit controlling operation of the plurality of chopper circuits. The plurality of chopper circuits each include at least one switching element and a reactor disposed to pass electric current depending on operation of the switching element. Respective reactors of the chopper circuits are arranged to be magnetically coupled to each other. In accordance with a characteristic obtained in advance of a ripple current of the multi-phase converter, with respect to a duty ratio of the switching element, the control circuit limits the duty ratio so that the duty ratio is included in a specific range in which the ripple current is larger than a predetermined level.

Preferably, the control circuit includes: a setting unit for setting a voltage command value for the power supply line in accordance with a voltage request value for the power supply line based on an operating state of the load; a duty ratio control unit for controlling the duty ratio so that a voltage of the power supply line is a voltage that meets the voltage command value; and a switching control unit for controlling, in accordance with the controlled duty ratio, ON and OFF of respective switching elements of the chopper circuits, so that the plurality of chopper circuits are shifted in timing from each other by a predetermined phase. The setting unit sets the voltage command value in accordance with the characteristic obtained in advance, so that the duty ratio is included in the specific range.

Preferably, in a case where it is necessary to enhance responsiveness of the multi-phase converter, the setting unit sets the voltage command value so that the duty ratio is included in the specific range and, in a case where it is unnecessary to enhance the responsiveness, the setting unit sets the voltage command value so that the voltage command value is a value that meets the voltage request value.

Preferably, the load includes an electric motor generating drive power for a vehicle. Based on drive power for the vehicle requested by a user of the vehicle, the setting unit determines whether or not it is necessary to enhance the responsiveness.

Preferably, the setting unit includes: a first setting unit setting the voltage command value in accordance with the voltage request value, using a first map in which a correspondence between the voltage request value and the voltage command value is defined in advance, so that the duty ratio is included in the specific range; a second setting unit setting the voltage command value in accordance with the voltage request value, using a second map in which a correspondence between the voltage request value and the voltage command value is defined in advance, so that the voltage command value is a value that meets the voltage request value; and a selection unit selecting the voltage command value set by the first setting unit in the case where it is necessary to enhance the responsiveness, selecting the voltage command value set by the second setting unit in the case where it is unnecessary to enhance the responsiveness, and outputting the selected voltage command value to the duty ratio control unit.

Preferably, the characteristic obtained in advance is a characteristic indicating that the ripple current has a local minimum when the duty ratio is a predetermined value, the ripple current has a local maximum when the duty ratio is a first value in a range in which the duty ratio is smaller than the predetermined value, and the ripple current monotonously increases as the duty ratio increases in a range in which the duty ratio is larger than the predetermined value. The setting unit compares the voltage request value with a reference voltage value at which the duty ratio has the first value, sets the voltage command value to the reference voltage value when the voltage request value is smaller than the reference voltage value, and sets the voltage command value to a predetermined maximum voltage value when the voltage request value is larger than the reference voltage value.

Preferably, the chopper circuits each include first and second switching elements connected in series between a ground line and the power supply line. The reactor has a coil winding connected between a connection node of the first and second switching elements and the DC power supply. Respective coil windings of the chopper circuits are wound around different portions of a common core.

ADVANTAGEOUS EFFECTS OF INVENTION

In accordance with the present invention, in the power supply device including the multi-phase converter having the magnetic-coupling-type reactor device, the responsiveness of the multi-phase converter can be enhanced by reliably making the ripple current larger than a predetermined level.

BRIEF DESCRIPTION OF DRAWINGS

Fig. 1 is a circuit diagram showing a configuration of a motor drive including a power supply device according to an embodiment of the present invention.
Fig. 2 is a circuit diagram showing an exemplary configuration of a magnetic-coupling-type reactor.
Fig. 3 is a graph showing a characteristic of a ripple current with respect to a duty ratio in a multi-phase converter.
Fig. 4 is a functional block diagram illustrating a control configuration for a multi-phase converter.
Fig. 5 is a map used by a control circuit for setting a voltage command value adapted to a high speed mode.
Fig. 6 is a map used by the control circuit for setting a voltage command value adapted to a normal mode.
Fig. 7 is a flowchart (1) showing a flow of a process of the control circuit.
Fig. 8 is a flowchart (2) showing a flow of a process of the control circuit.

DESCRIPTION OF EMBODIMENTS

An embodiment of the present invention will hereinafter be described in detail with reference to the drawings. In the following, the same or corresponding components in the drawings are denoted by the same reference characters, and a description thereof will not be repeated in principle.

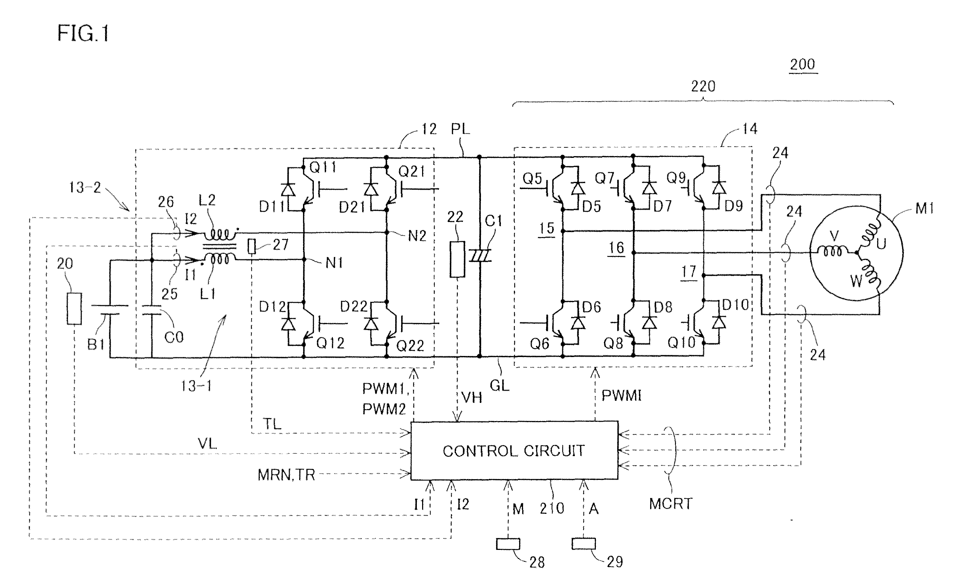

Fig. 1 is a circuit diagram showing a configuration of a motor drive 200 including a power supply device according to the embodiment of the present invention.

Referring to Fig. 1, motor drive 200 includes a DC (direct current) power supply B1, a magnetic-coupling-type multi-phase converter 12, a smoothing capacitor C1, a control circuit 210, and a load 220. Multi-phase converter 12 and control circuit 210 constitute the power supply device according to the embodiment of the present invention.

DC power supply B1 outputs a DC voltage. DC power supply B 1 is typically formed of a secondary battery such as nickel-metal hydride or lithium-ion secondary battery.

Multi-phase converter 12 includes a smoothing capacitor C0 and parallel-connected chopper circuits 13-1 and 13-2. Chopper circuit 13-1 includes semiconductor switching elements for electric power (hereinafter simply referred to as "switching elements") Q11 and Q12, diodes D11 and D12, and a reactor L1. Switching elements Q11 and Q12 are connected in series between a power supply line PL and a ground line GL. Reactor L1 is electrically connected between a node N1, which is a connection node of switching elements Q11 and Q12, and DC power supply B1. Diodes D11 and D12 are connected in anti-parallel with switching elements Q11 and Q12, respectively. Smoothing capacitor C0 smoothes a DC voltage on the low-voltage side of multi-phase converter 12, which is the output voltage of DC power supply B1.

Chopper circuit 13-2 is configured similarly to chopper circuit 13-1, and includes switching elements Q21 and Q22, diodes D21 and D22, and a reactor L2. Reactor L2 is electrically connected between a node N2, which is a connection node of switching elements Q21 and Q22, and DC power supply B1.

In multi-phase converter 12, reactors L1 and L2 are arranged so that they are magnetically coupled to each other. Namely, reactors L1 and L2 are provided to constitute a magnetic-coupling-type reactor.

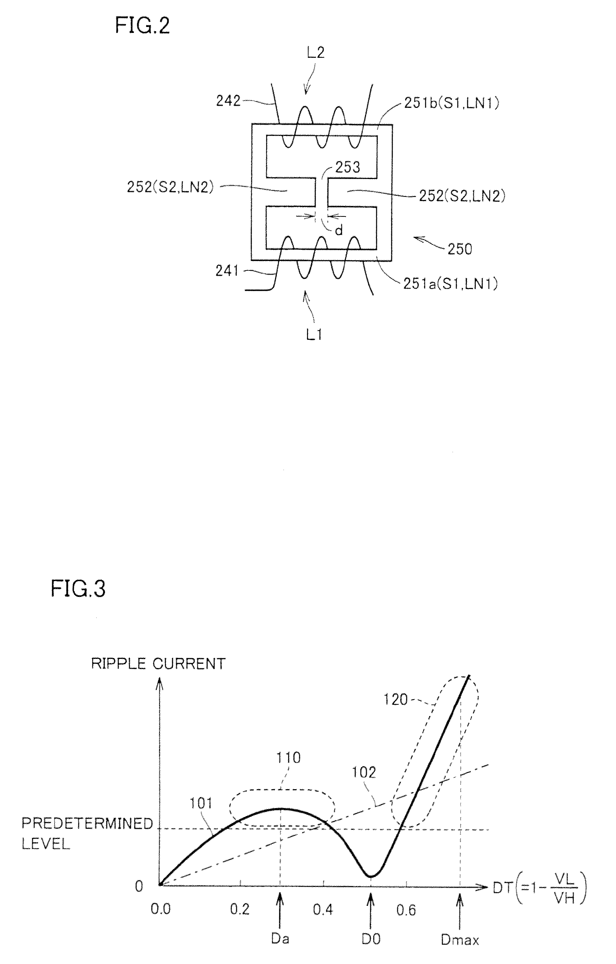

Fig. 2 shows an exemplary configuration of the magnetic-coupling-type reactor.

Referring to Fig. 2, the magnetic-coupling-type reactor includes a core 250 and coil windings 241, 242 wound on core 250. Core 250 includes outer legs 251a, 251b, and central legs 252 arranged to face each other with a gap 253 therebetween.

Coil winding 241 which is a constituent of reactor L1 is wound around outer leg 251a. Coil winding 242 which is a constituent of reactor L2 is wound around outer leg 251b. Here, a magnetic resistance R1 of outer legs 251a, 251b is expressed by a formula (1) below where S1 represents the cross-sectional area of outer legs 251a and 251b and LN1 represents the length thereof. Likewise, a magnetic resistance R2 of central legs 252 is expressed by a formula (2) below where S2 represents the cross-sectional area of central legs 252, LN2 represents the length thereof, and d represents the length of the gap. Further, in formulas (1) and (2), $\mu$ represents the magnetic permeability of core 250 and $\mu 0$ represents the magnetic permeability of the air in the gap.

$$R1 \approx (1/\mu) \bullet (LN1/S1) \qquad \dots (1)$$

$$R2 \approx (1/\mu) \bullet 2 \bullet (LN2/S2) + 1/\mu 0 \bullet (d/S2) \quad \dots (2)$$

In the present embodiment, constants S1, LN1, S2, LN2, and d of the magnetic-coupling-type reactor are set, so that R1 and R2 provided by formulas (1) and (2) satisfy R2 >> R1.

By this setting, most of a magnetic flux generated by electric current passing through coil winding 241 is interlinked with coil winding 242, and most of a magnetic flux generated by electric current passing through coil winding 242 is interlinked with coil winding 241. Consequently, in Fig. 1, counter electromotive forces in the opposite direction to respective electromotive forces generated in reactors L1 and L2 are generated in reactors L2 and L1 respectively.

The shape of core 250 is not limited to the example in Fig. 2, and may be any as long as the equivalent circuit shown in Fig. 1 can be configured. For example, outer legs 251 a, 251b may also have a gap therein.

Referring again to Fig. 1, smoothing capacitor C1 is connected between power supply line PL and ground line GL. Load 220 includes an inverter 14 connected to power supply line PL and ground line GL, and an AC (alternating current) motor M1 connected to inverter 14.

Inverter 14 performs bidirectional electric-power conversion between DC power on power supply line PL and AC power which is input/output to/from AC motor M1. AC motor M1 is driven by the AC power which is input/output to/from inverter 14 to generate a positive or negative torque.

Inverter 14 is made up of a U phase arm 15, a V phase arm 16, and a W phase arm 17. U phase arm 15, V phase arm 16, and W phase arm 17 are disposed in parallel between power supply line PL and ground line GL. U phase arm 15 is constituted of switching elements Q5, Q6, V phase arm 16 is constituted of switching elements Q7, Q8, and W phase arm 17 is constituted of switching elements Q9, Q10. Diodes D5 to D10 are connected in anti-parallel with switching elements Q5 to Q10, respectively. Respective intermediate nodes of U phase arm 15, V phase arm 16, and W phase arm 17 are connected to respective ends of stator windings of the U phase, the V phase, and the W phase of AC motor M1. Respective other ends of these stator windings are connected at a neutral point.

AC motor M1 is formed for example of a permanent-magnet-type synchronous motor operating as a motor generator. AC motor M1 is a drive motor for generating a drive torque for drive wheels of an electrically-powered vehicle such as hybrid vehicle, electric vehicle, or fuel cell vehicle. Namely, motor drive 200 is typically mounted on an electrically-powered vehicle. AC motor M1 regeneratively generates electric power from a rotational force of drive wheels when the electrically-powered vehicle is regeneratively braked.

Alternatively, this AC motor M1 may be incorporated in a hybrid vehicle so that AC motor M1 has the function of an electric generator driven by an engine and also operates as an electric motor adapted to the engine and capable for example of starting the engine.

A voltage sensor 20 detects a DC voltage VL on the low-voltage side of multi-phase converter 12 that corresponds to the output voltage of DC power supply B1. A voltage sensor 22 detects a voltage of power supply line PL, namely a DC voltage VH on the high-voltage side of multi-phase converter 12.

A current sensor 24 detects a motor current MCRT of each phase that flows between inverter 14 and AC motor M1. The sum of respective instantaneous values of the phase currents of the three phases is always zero, and therefore, current sensors 24 may be disposed for any two phases of the three phases and the motor current of the remaining phase for which current sensor 24 is not disposed may be determined by calculation. A current sensor 25 detects a reactor current I1 passing through reactor L1, and a current sensor 26 detects a reactor current I2 passing through reactor L2. Respective values VL, VH detected by voltage sensors 20, 22, respective values I1, I2 detected by current sensors 25, 26, and value MCRT detected by current sensor 24 are input to control circuit 210.

Further, to control circuit 210, respective signals from a temperature sensor 27, a power mode switch 28, and an accelerator pedal position sensor 29 are input.

Temperature sensor 27 detects a temperature TL of the magnetic-coupling-type reactor in multi-phase converter 12, and transmits the temperature to control circuit 210.

Power mode switch 28 is operated when a user of motor drive 200 selects a power mode (a mode placing a priority on the output power of AC motor M 1 rather than the system efficiency of motor drive 200). Power mode switch 28 detects whether or not the user has performed an operation of selecting the power mode, and transmits the result of detection as a mode signal M to control circuit 210.

Accelerator pedal position sensor 29 detects the extent to which the accelerator pedal is depressed by a user, and transmits the result of detection as an accelerator signal A to control circuit 210.

Control circuit 210 is constituted of a CPU (Central Processing Unit) and an electronic control unit (ECU) (they are not shown) in which a memory is contained, and configured to execute predetermined operational processing based on a map and a program stored in the memory. Alternatively, at least a part of the ECU may be configured to execute predetermined numerical/logical operational processing by means of hardware such as electronic circuit.

Based on the signals that are input from the above-described sensors respectively as well as a rotational speed MRN of AC motor M1 and a torque command value TR for AC motor M1, control circuit 210 controls ON and OFF (switching) of switching elements Q11, Q12, Q21, Q22, and Q5 to Q10 of multi-phase converter 12 and inverter 14, so that AC motor M1 operates in accordance with an operation command. Specifically, in order to control the voltage of power supply line PL so that the voltage reaches a predetermined voltage, control circuit 210 generates signals PWM1, PWM2 for controlling ON and OFF of switching elements Q11, Q12, Q21, Q22. Further, in order to control the output torque of AC motor M1 in accordance with torque command value TR, control circuit 210 generates a signal PWMI for controlling ON and OFF of switching elements Q5 to Q10, so that the amplitude and/or the phase of a pseudo AC voltage applied to AC motor M1 are/is controlled.

Chopper circuits 13-1, 13-2 respectively render switching elements Q12, Q22 of the lower arm ON or OFF to allow the switched current to pass through reactors L1, L2, and accordingly use the current path provided by diodes D11, D21 of the upper arm, so that DC voltage VH can be generated on power supply line PL by stepping up DC voltage VL on the low-voltage side (power running mode, I1 > 0, I2 >0).

On the contrary, chopper circuits 13-1, 13-2 respectively render switching elements Q11, Q21 of the upper arm ON or OFF to allow the switched current to pass through reactors L1, L2, and accordingly use the current path provided by diodes D12, D22 of the lower arm, so that DC power supply B1 is charged with DC voltage VL generated by stepping down DC voltage VH on the high-voltage side (regenerative mode, I1 < 0, I2 0).

In chopper circuits 13-1, 13-2, switching elements Q11, Q21 of the upper arm may be fixed in the OFF state in the power running mode, and switching elements Q12, Q22 of the lower arm may be fixed in the OFF state in the regenerative mode. It should be noted here that, for continuous adaptation to the regenerative mode and the power running mode without changing control depending on the direction in which the current flows, switching elements Q11, Q21 of the upper arm and switching elements Q12, Q22 of the lower arm may complementarily be rendered ON or OFF in each switching period.

In the present embodiment, the ratio of an ON period of the switching elements of the lower arm to the switching period will hereinafter be defined as a duty ratio DT. Namely, the ratio of an ON period of the upper arm is expressed as (1.0 - DT). Based on general characteristics of the chopper circuits, the relation between this duty ratio DT and the voltage conversion in chopper circuits 13-1, 13-2 each is expressed by a formula (3) below. Formula (3) is changed to express voltage VH on the high-voltage side by formula (4).

$$DT = 1.0 - (VL/VH) \quad ...(3)$$

$$VH = VL / (1.0 - DT) \quad ...(4)$$

From formulas (3) and (4), it is understood that VH = VL is met when switching elements Q12, Q22 of the lower arm are fixed in the OFF state (DT = 0.0), and voltage VH increases with an increase of duty ratio DT. Namely, control circuit 210 can control voltage VH of power supply line PL by controlling duty ratio DT in chopper circuits 13-1, 13-2. Particulars of such converter control will be described in detail later herein.

Two chopper circuits 13-1, 13-2 constituting multi-phase converter 12 operate with respective phases shifted by 180 (360/2) degrees, namely a half period relative to the switching period. Accordingly, respective phases of signals PWM1 and PWM2 are shifted from each other by 180 degrees.

Further, in multi-phase converter 12, the magnetic-coupling-type reactor acts so that respective influences of ripple components of reactor currents I1, I2 cancel each other out between circuit 13-1 and circuit 13-2. Therefore, the characteristic of the ripple current with respect to the duty ratio in multi-phase converter 12 of Fig. 1 differs from that of normal chopper circuits.

Fig. 3 is a graph showing the characteristic of the ripple current with respect to duty ratio DT in multi-phase converter 12. In Fig. 3, a characteristic line 102 corresponds to a plotted characteristic of the ripple current with respect to the duty ratio in normal chopper circuits in which normal reactors (that are not of magnetic-coupling-type) replace respective reactors L1, L2 of chopper circuits 13-1, 13-2. In the normal chopper circuits, a longer ON period of switching elements of the lower arm (a larger DT) provides a larger amount of energy stored in the reactors and a larger change of electric current when the switching elements of the lower arm are rendered OFF. The ripple current thus monotonously increases.

In contrast, in multi-phase converter 12 having the magnetic-coupling-type reactor, respective electromotive forces of reactors L1, L2 that are in directions opposite to each other act on each other. Therefore, a maximum effect of suppressing the ripple current is obtained under the condition that switching elements Q12 and Q22 of the lower arm in chopper circuits 13-1 and 13-2 with respective phases shifted by 180 degrees are complementarily rendered ON or OFF.

Thus, according to a characteristic line 101 representing the characteristic of the ripple current with respect to duty ratio DT in multi-phase converter 12, a maximum effect of suppressing the ripple current (a local minimum of the ripple current) is obtained at DT = D0 (around 0.5). In the range where DT < D0, the ripple current has a local maximum at DT = Da. In the range where DT > D0, the ripple current monotonously increases as DT increases.

Generally, responsiveness of multi-phase converter 12 (the rate at which voltage VH of power supply line PL is brought close to a voltage command value VHr (which will be described later herein)) is higher as the ripple current is larger. Therefore, in multi-phase converter 12, the responsiveness of multi-phase converter 12 is high when the ripple current is included in a region (region 110 or region 120 shown in Fig. 3) higher than a predetermined level.

Analysis and operation experiments for example may be used to obtain characteristic line 101 in advance, so that the ripple current of multi-phase converter 12 can be controlled quantitatively by controlling duty ratio DT. Based on the above, multi-phase converter 12 of the power supply device in the embodiment of the present invention is controlled in such a manner that the duty ratio DT is limited, when it becomes necessary to enhance the responsiveness of multi-phase converter 12, so that the ripple current is included in a region (region 110 or region 120 shown in Fig. 3) higher than a predetermined level (the duty ratio is limited to Da or Dmax shown in Fig. 3 for example), to thereby enhance the responsiveness of multi-phase converter 12. Dmax shown in Fig. 3 is a duty ratio corresponding to a maximum stepped-up voltage value VHmax of multi-phase converter 12, and is Dmax = 1.0 - (VL/VHmax).

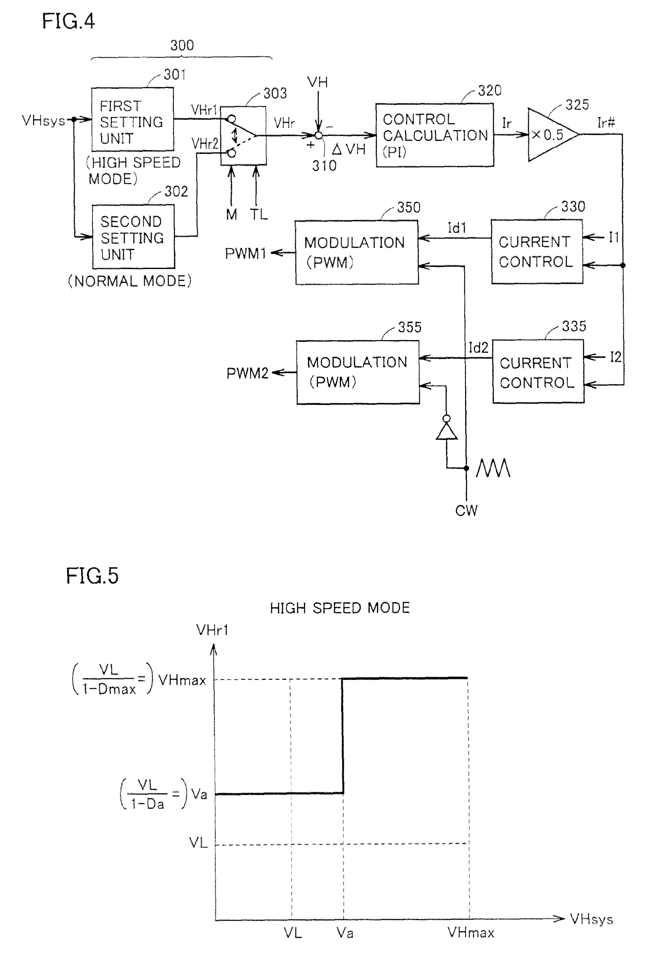

Fig. 4 is a functional block diagram illustrating a control configuration for multi-phase converter 12 in the power supply device according to the embodiment of the present invention. Respective functions of the blocks shown in Fig. 4 may be implemented through software processing by control circuit 210, or may be implemented by configuring an electronic circuit (hardware) implementing the functions as control circuit 210.

Referring to Fig. 4, control circuit 210 shown in Fig. 1 has a voltage command setting unit 300, a subtraction unit 310, a control calculation unit 320, a multiplication unit 325, current control units 330, 335, and modulation units 350, 355.

Voltage command setting unit 300 sets a voltage command value VHr in accordance with a voltage request value VHsys. Voltage request value VHsys is a value requested for voltage VH of power supply line PL, and is provided for example from an external ECU (not shown). Voltage request value VHsys is variably set, in a range lower than maximum stepped-up voltage value VHmax, depending on a user's request (such as mode signal M and accelerator signal A) and an operating state of load 220 (such as rotational speed MRN and torque command value TR of AC motor M1). Voltage command value VHr is a target control value for voltage VH of power supply line PL.

Voltage command setting unit 300 includes a first setting unit 301, a second setting unit 302, and a selection unit 303.

First setting unit 301 sets a voltage command value VHr1 for a high speed mode in accordance with voltage request value VHsys, in consideration of the ripple current characteristic shown in Fig. 3. Voltage command value VHr1 for a high speed mode refers to voltage command value VHr which is used when a need has arisen to enhance the responsiveness of multi-phase converter 12.

Second setting unit 302 sets a voltage command value VHr2 for a normal mode in accordance with voltage request value VHsys. Voltage command value VHr2 for a normal mode refers to voltage command value VHr which is used when the need to enhance the responsiveness of multi-phase converter 12 has not arisen.

Selection unit 303 selects a command value which is one of voltage command value VHr1 for the high speed mode and voltage command value VHr2 for the normal mode, based on mode signal M and temperature TL of the magnetic-coupling-type reactor, and outputs to subtraction unit 310 the selected command value as voltage command value VHr.

Fig. 5 is a map used by first setting unit 301 for setting voltage command value VHr1. "Va" shown in Fig. 5 represents a voltage value corresponding to duty ratio Da shown in Fig. 3, and is Va = VL / (1.0-Da). Namely, DT = Da holds when VH = Va holds. "Va" will also be referred to as "reference voltage value Va" hereinafter. VHmax is VHmax = VL / (1.0-Dmax), and duty ratio Dmax shown in Fig. 3 holds when VH = VHmax holds.

As shown in Fig. 5, first setting unit 301 sets voltage command value VHr1 to one of reference voltage value Va and maximum stepped-up voltage value VHmax. More specifically, it compares voltage request value VHsys with reference voltage value Va, and sets the voltage command value to VHr1 = Va when VHsys $\leq$ Va holds, and to VHr1 = VHmax when VHsys > Va holds.

Namely, depending on the result of comparison between voltage request value VHsys and reference voltage value Va, first setting unit 301 sets voltage command value VHr1 to one of reference voltage value Va and maximum stepped-up voltage value VHmax, to thereby limit duty ratio DT to one of Da and Dmax. When duty ratio DT is limited to Da, the ripple current is included in region 110 shown in Fig. 3. When duty ratio DT is limited to Dmax, the ripple current is included in region 120 shown in Fig. 3. Therefore, voltage command value VHr1 which is set by first setting unit 301 is used to make the ripple current higher than a predetermined level and enhance the responsiveness of multi-phase converter 12.

In order to prevent hunting of voltage command value VHr1, hysteresis may be provided between the case where voltage command value VHr1 is increased from Va to VHmax and the case, on the contrary, where voltage command value VHr1 is decreased from VHmax to Va.

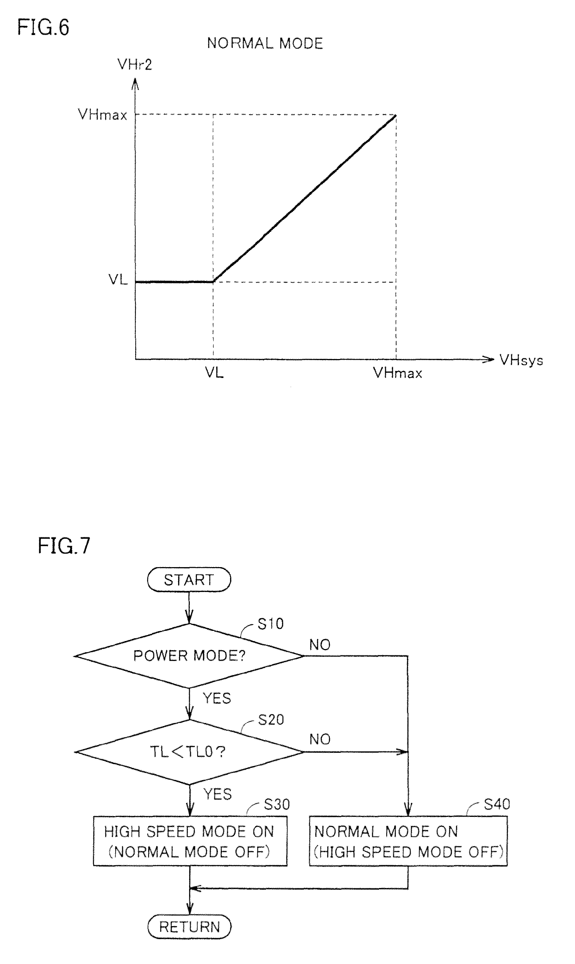

Fig. 6 is a map used by second setting unit 302 for setting voltage command value VHr2. As shown in Fig. 6, second setting unit 302 variably sets voltage command value VHr2 to a value that meets voltage request value VHsys, in the range from voltage VL to maximum stepped-up voltage value VHmax. More specifically, it sets the voltage command value to VHr2 = VL when VHsys $\leq$ VL holds, and to VHr2 = VHsys when VHsys > VL holds. Therefore, voltage command value VHr2 which is set by second setting unit 302 can be used to control voltage VH in the usual manner so that voltage VH has a value that meets voltage request value VHsys.

Referring again to Fig. 4, subtraction unit 310 subtracts, from voltage command value VHr which has been set by voltage command setting unit 300, voltage VH detected by voltage sensor 22 to thereby calculate a voltage difference ΔVH. Control calculation unit 320 typically follows PI control (proportional integral) calculation to set a current command value Ir so that voltage difference ΔVH approaches zero. In qualitative respect, as ΔVH increases (changes in the positive direction), current command value Ir increases and, as ΔVH decreases (changes in the negative direction), current command value Ir decreases.

Multiplication unit 325 multiplies current command value Ir for the whole multi-phase converter 12 by 0.5 to thereby calculate a current command value Ir# for chopper circuits 13-1, 13-2 each (Ir# = Ir/2).

Current control unit 330 sets a duty command value Id1 in accordance with the control calculation (such as PI control calculation) based on the current difference between reactor current I1 detected by current sensor 25 and current command value Ir#. Likewise, current control unit 335 sets a duty command value Id2 in accordance with control calculation (such as PI control calculation) based on a current difference between reactor current I2 detected by current sensor 26 and current command value Ir#.

Duty command values Id1, Id2 are set in a range where 0.0 $\leq$ Id1, Id2 < 1.0. When reactor currents I1, I2 are to be increased in accordance with current command value Ir#, current control units 330, 335 increase the duty ratio. On the contrary, when reactor currents I1, I2 are to be decreased, current control units 330, 335 set duty command values Id1, Id2 so that the duty ratio decreases.

Modulation unit 350 generates signal PWM1 for controlling chopper circuit 13-1, in accordance with a voltage comparison between a carrier wave CW which is a triangular wave or sawtooth wave of a predetermined frequency and duty command value Id1. The frequency of carrier wave CW corresponds to the switching frequency of chopper circuits 13-1, 13-2. The peak voltage of carrier wave CW corresponds to the range from 0 to 1.0 of the duty ratio indicated by duty command value Id1. Modulation unit 350 generates signal PWM1 so that switching element Q12 of the lower arm is rendered ON in a period in which Id1 > CW holds, and switching element Q12 of the lower arm is rendered OFF in a period in which CW > Id1 holds.

As seen from the foregoing, when voltage VH is lower than voltage command value VHr, chopper circuit 13-1 is pulse-width-modulation (PWM)-controlled in such a manner that duty command value Id 1 is set to increase the duty ratio of the lower arm and thereby increase reactor current I1. On the contrary, when voltage VH is higher than voltage command value VHr, chopper circuit 13-1 is pulse-width-modulation (PWM)-controlled in such a manner that duty command value Id1 is set to decrease the duty ratio of the lower arm and thereby decrease reactor current I1.

Modulation unit 355 has a similar function to modulation unit 350, and generates signal PWM2 for controlling chopper circuit 13-2, in accordance with a voltage comparison between an inverted signal of the above-described carrier wave CW, namely a signal with its phase shifted by 180 degrees relative to carrier wave CW, and duty command value Id2. Accordingly, chopper circuits 13-1, 13-2 are controlled independently of each other by switching control (duty ratio control) for controlling voltage VH so that voltage VH meets voltage command value VHr, under the condition that respective phases of switching control are shifted by 180 degrees. In an OFF period of switching elements Q12, Q22 of the lower arm, switching elements Q11, Q21 of the upper arm may be rendered ON.

Thus, in accordance with the control configuration shown in Fig. 4, two parallel-connected chopper circuits 13-1 and 13-2 in multi-phase converter 12 operate with respective phases shifted by an electrical angle of 180°, and chopper circuits 13-1, 13-2 are controlled independently of each other by control of reactor currents I1, I2 for controlling voltage VH so that voltage VH meets voltage command VHr.

Namely, in the configuration of Fig. 4, subtraction unit 310, control calculation unit 320, multiplication unit 325, and current control units 330, 335 constitute "duty control unit" and modulation units 350, 355 constitute "switching control unit."

Fig. 7 is a flowchart showing a control process procedure for implementing the function of selection unit 303 in above-described voltage command setting unit 300. Each step (hereinafter abbreviated as "S") of the flowchart illustrated below is basically implemented by software processing performed by control circuit 210. Alternatively, it may be implemented by hardware processing performed by an electronic circuit or the like provided in control circuit 210.

In S10, based on mode signal M, control circuit 210 determines whether or not a user has performed an operation of selecting the power mode. When the user has performed the operation of selecting the power mode (YES in S10), control circuit 210 determines that it is necessary to enhance the responsiveness of multi-phase converter 12, and proceeds to S20. Otherwise (NO in S 10), it determines that enhancement of the responsiveness of multi-phase converter 12 is unnecessary, and proceeds to S40.

In S20, control circuit 210 determines whether or not temperature TL of the magnetic-coupling-type reactor is lower than a predetermined temperature TL0. When temperature TL is lower than predetermined temperature TL0 (YES in S20), control circuit 210 determines that the system efficiency can be kept in an allowable range even if the ripple current is made larger than a predetermined level, and proceeds to S30. Otherwise (NO in S20), it determines that the system efficiency cannot be kept in an allowable range if the ripple current is made larger than the predetermined level, and proceeds to S40.

In S30, control circuit 210 renders the high speed mode ON (the normal mode OFF). Namely, it selects voltage command value VHr1 for the high speed mode and outputs the selected value to subtraction unit 310.

In S40, control circuit 210 renders the normal mode ON (the high speed mode OFF). Namely, it selects voltage command value VHr2 for the normal mode and outputs the selected value to subtraction unit 310.

In this way, control circuit 210 according to the present embodiment sets, in response to user's selection of the power mode, voltage command value VHr so that the duty ratio is limited to a value which makes the ripple current larger than the predetermined level, in accordance with the ripple current characteristic of multi-phase converter 12 that can be identified in advance. Thus, the ripple current can reliably made larger than the predetermined level and the responsiveness of multi-phase converter 12 can accordingly be enhanced.

The present embodiment may also be modified as detailed below.

While the above-described Fig. 5 illustrates the case where voltage command value VHr1 is set to Va or VHmax, voltage command value VHr1 may be set to another value as long as duty ratio DT is limited to a value that allows the ripple current to be included in a region (region 110 or region 120 in Fig. 3) where the ripple current is higher than the predetermined level.

Further, instead of limiting voltage command value VHr1, duty ratio DT may directly be limited so that the ripple current is higher than the predetermined level.

Furthermore, the functions of second setting unit 302 and selection unit 303 in Fig. 4 may not be provided and the process step in S20 of Fig. 7 may be skipped. In this case as well, the responsiveness of multi-phase converter 12 can be enhanced.

Moreover, regarding load 220, AC motor M1 and inverter 14 mounted on a hybrid vehicle, electric vehicle or the like are illustrated above by way of example. Load 220 is not limited to them.

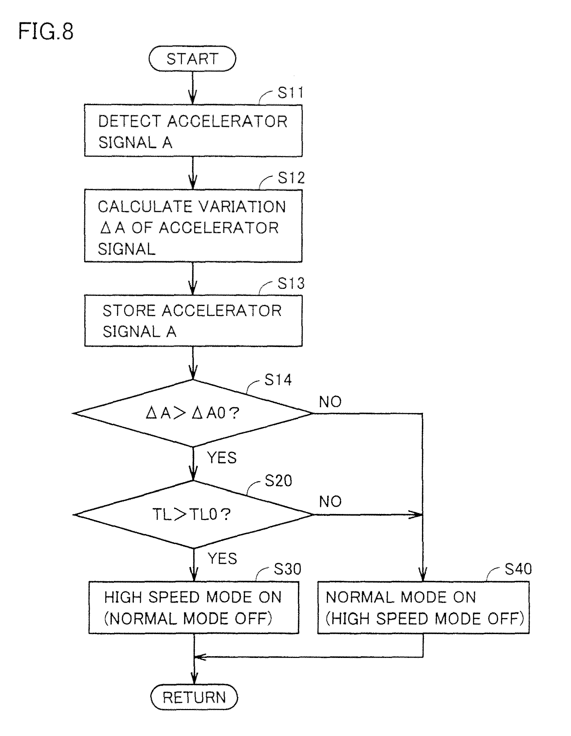

In addition, Fig. 7 illustrates that whether or not it is necessary to enhance the responsiveness of multi-phase converter 12 is determined depending on the user's operation of selecting the power mode. Alternatively, based on accelerator signal A for example, a large power variation may be predicted and, from the result of prediction, it may be determined whether or not it is necessary to enhance the responsiveness of multi-phase converter 12. This alternative control process procedure of control circuit 210 is shown in Fig. 8. In the flowchart shown in Fig. 8, the same process step as that shown in above-described Fig. 7 is denoted by the same step number. Operations in these steps are identical. Therefore, the detailed description of them will not be repeated here.

As shown in Fig. 8, control circuit 210 detects accelerator signal A in S11 and calculates a variation $\Delta A$ of the accelerator signal in S 12. Variation $\Delta A$ of the accelerator signal is a difference between an accelerator signal B detected in the preceding cycle and accelerator signal A detected in the present cycle ($\Delta A = A - B$). In S13, control circuit 210 stores accelerator signal A detected in the present cycle in a memory. Accelerator signal A stored by the process step in S 13 is used for calculation of variation $\Delta A$ as "accelerator signal B" in the subsequent cycle.

In S 14, control circuit 210 determines whether or not variation $\Delta 4$ is larger than a threshold value $\Delta AO$. When variation $\Delta A$ is larger than threshold value $\Delta A0$ (YES in S14), control circuit 210 predicts occurrence of a large power variation, determines it is necessary to enhance the responsiveness of multi-phase converter 12, proceeds to S20, and renders the high speed mode ON. Otherwise (NO in S14), control circuit 210 predicts that a large power variation will not occur, determines that enhancement of the responsiveness of multi-phase converter 12 is unnecessary, and proceeds to S40 in which it renders the normal mode ON.

In this way, a large power variation can be predicted from user's operation of the accelerator pedal and, based on the result of prediction, the responsiveness of multi-phase converter 12 can automatically be changed.

It should be construed that embodiments disclosed herein are by way of illustration in all respects, not by way of limitation. It is intended that the scope of the present invention is defined by claims, not by the above description, and encompasses all modifications and variations equivalent in meaning and scope to the claims.

REFERENCE SIGNS LIST

12 multi-phase converter; 13-1, 13-2 chopper circuit; 14 inverter; 15 U phase arm; 16 V phase arm; 17 W phase arm; 20, 22 voltage sensor; 24, 25, 26 current sensor; 27 temperature sensor; 28 power mode switch; 29 accelerator pedal position sensor; 101, 102 characteristic line; 110, 120 region; 200 motor drive; 210 control circuit; 220 load; 241, 242 coil winding; 250 core; 251a, 251b outer leg; 252 central leg; 253 gap; 300 voltage command setting unit; 301 first setting unit; 302 second setting unit; 303 selection unit; 310 subtraction unit; 320 control calculation unit; 325 multiplication unit; 330, 335 current control unit; 350, 355 modulation unit; B1 DC power supply; C0 smoothing capacitor; C1. smoothing capacitor; D11, D12, D21, D22 diode; GL ground line; L1, L2 reactor; M 1 AC motor; PL power supply line; Q11, Q12, Q21, Q22 switching element

**Claims**

1. A power supply device comprising:

   a multi-phase converter (12) including a plurality of chopper circuits (13-1, 13-2) connected in parallel between a power supply line (PL) connected to a load (220) and a DC power supply (B1); and
   a control circuit (210) controlling operation of said plurality of chopper circuits,
   said plurality of chopper circuits each including at least one switching element (Q11, Q12, Q21, Q22) and a reactor (L1, L2) disposed to pass electric current depending on operation of said switching element,
   respective said reactors of said chopper circuits being arranged to be magnetically coupled to each other, and in accordance with a characteristic (101) obtained in advance of a ripple current of said multi-phase converter, with respect to a duty ratio of said switching element, said control circuit limiting said duty ratio so that said duty ratio is included in a specific range (10, 120) in which said ripple current is larger than a predetermined level.

2. The power supply device according to claim 1, wherein
   said control circuit includes:

   a setting unit (300) for setting a voltage command value for said power supply line in accordance with a voltage request value for said power supply line based on an operating state of said load;
   a duty ratio control unit (310, 320, 325, 330, 335) for controlling said duty ratio so that a voltage of said power supply line is a voltage that meets said voltage command value; and

a switching control unit (350, 355) for controlling, in accordance with said controlled duty ratio, ON and OFF of respective said switching elements of said chopper circuits, so that said plurality of chopper circuits are shifted in timing from each other by a predetermined phase, and

said setting unit sets said voltage command value in accordance with said characteristic obtained in advance, so that said duty ratio is included in said specific range.

3. The power supply device according to claim 2, wherein

in a case where it is necessary to enhance responsiveness of said multi-phase converter, said setting unit sets said voltage command value so that said duty ratio is included in said specific range and, in a case where it is unnecessary to enhance said responsiveness, said setting unit sets said voltage command value so that said voltage command value is a value that meets said voltage request value.

4. The power supply device according to claim 3, wherein

said load includes an electric motor (M1) generating drive power for a vehicle, and based on drive power for said vehicle requested by a user of said vehicle, said setting unit determines whether or not it is necessary to enhance said responsiveness.

5. The power supply device according to claim 3, wherein

said setting unit includes:

a first setting unit (301) setting said voltage command value in accordance with said voltage request value, using a first map in which a correspondence between said voltage request value and said voltage command value is defined in advance, so that said duty ratio is included in said specific range;

a second setting unit (302) setting said voltage command value in accordance with said voltage request value, using a second map in which a correspondence between said voltage request value and said voltage command value is defined in advance, so that said voltage command value is a value that meets said voltage request value; and

a selection unit (303) selecting said voltage command value set by said first setting unit in the case where it is necessary to enhance said responsiveness, selecting said voltage command value set by said second setting unit in the case where it is unnecessary to enhance said responsiveness, and outputting said selected voltage command value to said duty ratio control unit.

6. The power supply device according to claim 2, wherein

said characteristic obtained in advance is a characteristic indicating that said ripple current has a local minimum when said duty ratio is a predetermined value, said ripple current has a local maximum when said duty ratio is a first value in a range in which said duty ratio is smaller than said predetermined value, and said ripple current monotonously increases as said duty ratio increases in a range in which said duty ratio is larger than said predetermined value, and

said setting unit compares said voltage request value with a reference voltage value at which said duty ratio has said first value, sets said voltage command value to said reference voltage value when said voltage request value is smaller than said reference voltage value, and sets said voltage command value to a predetermined maximum voltage value when said voltage request value is larger than said reference voltage value.

7. The power supply device according to claim 1, wherein

said chopper circuits each include first and second switching elements (Q11, Q12, Q21, Q22) connected in series between a ground line (GL) and said power supply line,

said reactor has a coil winding (241, 242) connected between a connection node (N1, N2) of said first and second switching elements and said DC power supply, and

respective said coil windings of said chopper circuits are wound around different portions (251a, 251b) of a common core (250).

FIG.1

FIG.2

FIG.3

## FIG.4

## FIG.5

HIGH SPEED MODE

FIG.6

NORMAL MODE

FIG.7

FIG.8

START

↓ S11

DETECT ACCELERATOR
SIGNAL A

↓ S12

CALCULATE VARIATION
$\Delta A$ OF ACCELERATOR
SIGNAL

↓ S13

STORE ACCELERATOR
SIGNAL A

↓ S14

$\Delta A > \Delta A0$ ? — NO

YES ↓ S20

$TL > TL0$ ? — NO

YES ↓ S30

HIGH SPEED MODE ON
(NORMAL MODE OFF)

S40

NORMAL MODE ON
(HIGH SPEED MODE OFF)

RETURN

## INTERNATIONAL SEARCH REPORT

International application No.

PCT/JP2009/071751

### A. CLASSIFICATION OF SUBJECT MATTER
*H02M3/155(2006.01)i*

According to International Patent Classification (IPC) or to both national classification and IPC

### B. FIELDS SEARCHED

Minimum documentation searched (classification system followed by classification symbols)
H02M3/155

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2003-304681 A (Toyota Motor Corp.), 24 October 2003 (24.10.2003), paragraphs [0040] to [0096]; fig. 1 (Family: none) | 1-7 |
| A | JP 2001-286059 A (Toshiba Efue Shisutemu Enjiniaringu Kabushiki Kaisha), 12 October 2001 (12.10.2001), paragraphs [0042] to [0090]; fig. 1 to 3 (Family: none) | 1-7 |

☐ Further documents are listed in the continuation of Box C.     ☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 08 February, 2010 (08.02.10) | Date of mailing of the international search report <br> 16 February, 2010 (16.02.10) |
|---|---|
| Name and mailing address of the ISA/ <br> Japanese Patent Office | Authorized officer |
| Facsimile No. | Telephone No. |

Form PCT/ISA/210 (second sheet) (April 2007)

**EP 2 521 253 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005065384 A